# FASCICULE DE BREVET EUROPEEN

(11) **EP 1 283 376 B1**
(45) Date de publication et mention de la délivrance du brevet: **08.06.2005**
(21) Numéro de dépôt: 02291919.5
(22) Date de dépôt: 29.07.2002
(51) Int. Cl.: F16F 13/10

(54) **Support antivibratoire hydraulique**
Hydraulisches Antischwingungslager
Hydraulic damping support

(30) Priorité: 07.08.2001 FR 0110545; 31.08.2001 FR 0111325
(43) Date de publication de la demande: 12.02.2003
(73) Titulaire: HUTCHINSON, 75008 Paris (FR)
(72) Inventeur: Pizanti, Thierry, 28220 La Ferte Villenneuil (FR); Collet, Loic, 28160 Gohory (FR)
(74) Mandataire: Burbaud, Eric

(56) Documents cités:
- EP-A- 0 354 381
- EP-A- 0 527 302
- FR-A- 2 751 042
- PATENT ABSTRACTS OF JAPAN vol. 1996, no. 05, 31 mai 1996 (1996-05-31) & JP 08 014314 A (TOYO TIRE & RUBBER CO LTD), 16 janvier 1996 (1996-01-16)
- PATENT ABSTRACTS OF JAPAN vol. 1995, no. 02, 31 mars 1995 (1995-03-31) & JP 06 307491 A (TOKAI RUBBER IND LTD), 1 novembre 1994 (1994-11-01)
- PATENT ABSTRACTS OF JAPAN vol. 017, no. 282 (M-1420), 31 mai 1993 (1993-05-31) & JP 05 010375 A (TOKAI RUBBER IND LTD), 19 janvier 1993 (1993-01-19)

## Description

La présente invention est relative aux supports antivibratoires hydrauliques, destinés par exemple au montage des moteurs de véhicules automobiles sur les caisses de ces véhicules.

Plus particulièrement, l'invention concerne un support antivibratoire hydraulique destiné à relier entre eux des premier et deuxième éléments rigides pour amortir et filtrer des vibrations entre ces éléments, ce support comportant :
- des première et deuxième armatures rigides destinées à être fixées respectivement aux premier et deuxième éléments rigides à réunir,
- un corps en élastomère qui présente sensiblement une forme de cloche s'étendant selon un axe central entre un sommet solidaire de la première armature et une base annulaire solidaire de la deuxième armature,
- une chambre de travail remplie de liquide, au moins partiellement délimitée par le corps en élastomère,
- une chambre de compensation remplie de liquide, délimitée partiellement par une paroi souple en élastomère,
- une cloison rigide qui sépare la chambre de travail et la chambre de compensation, cette cloison rigide comportant une première pièce de tôle qui est en contact étanche avec la base annulaire du corps en élastomère et une deuxième pièce rigide qui est en contact étanche avec ladite première pièce de tôle et qui délimite la chambre de compensation avec la paroi souple, la première pièce de tôle comportant une première grille centrale qui communique avec la chambre de travail et la deuxième pièce rigide comportant une deuxième grille centrale qui communique avec la chambre de compensation en délimitant avec la première grille un logement de clapet,
- un clapet de découplage disposé dans le logement de clapet de façon à être déplaçable avec un faible débattement parallèlement à l'axe central en obturant les première et deuxième grilles,
- et un passage étranglé rempli de liquide, qui fait communiquer la chambre de travail avec la chambre de compensation, ce passage étranglé étant délimité partiellement par la première pièce de tôle et la deuxième pièce rigide de la cloison rigide, ledit passage étranglé s'étendant angulairement autour du clapet de découplage sur une longueur linéaire supérieure au périmètre de la cloison rigide, et ce passage étranglé comportant des premier et deuxième étages, le premier étage du passage étranglé étant voisin de la chambre de travail et s'étendant entre une première extrémité qui communique avec la chambre de travail et une deuxième extrémité qui communique avec le deuxième étage, tandis que le deuxième étage du passage étranglé est voisin de la chambre de compensation et s'étend entre une première extrémité qui communique avec la deuxième extrémité du premier étage et une deuxième extrémité qui communique avec la chambre de compensation.

Un support antivibratoire hydraulique de ce type est divulgué par exemple dans le document FR-A-2 751 042, dans lequel la deuxième pièce rigide de la cloison rigide est une pièce de fonderie.

Ce support antivibratoire connu donne toute satisfaction au plan de son fonctionnement technique. En particulier, on sait que la fréquence de résonance du passage étranglé, qui est également la fréquence à laquelle le support antivibratoire a ses meilleures performances vis à vis des vibrations de grande amplitude, dépend du rapport en la longueur et le diamètre équivalent du passage étranglé : grâce à la réalisation du passage étranglé sur deux étages, on peut obtenir une grande longueur de ce passage et donc une fréquence de résonance assez faible dudit passage étranglé, ce qui peut s'avérer nécessaire dans certaines applications.

Mais le support antivibratoire connu susmentionné présente toutefois l'inconvénient que la pièce de fonderie de sa cloison rigide est relativement coûteuse à réaliser et également relativement massive, ce qui tend à augmenter à la fois le prix de revient et le poids du support antivibratoire.

La présente invention a notamment pour but de pallier ces inconvénients.

A cet effet, selon l'invention, un support antivibratoire du genre question est caractérisé :
- en ce que la deuxième pièce rigide de la coque rigide est constituée par une deuxième pièce de tôle, découpée et emboutie,
- en ce que la paroi souple en élastomère est solidaire d'une embase rigide qui est elle-même solidarisée avec la deuxième armature et qui présente au moins une paroi latérale s'étendant selon l'axe central depuis la deuxième armature jusqu'à un bord d'appui annulaire intérieur,
- en ce que la deuxième pièce de tôle comporte un bord d'appui annulaire extérieur qui est en contact étanche avec le bord d'appui annulaire intérieur de l'embase, la deuxième pièce de tôle comportant en outre un ressaut qui s'étend selon l'axe central depuis ledit bord d'appui annulaire extérieur jusqu'à une zone annulaire pleine qui est en contact étanche avec la première pièce de tôle, le deuxième étage du passage étranglé étant délimité entre la première pièce de tôle, la paroi latérale de l'embase, le bord d'appui annulaire intérieur de l'embase, le bord d'appui annulaire extérieur de la deuxième pièce de tôle et le ressaut de ladite deuxième pièce de tôle,
- et en ce que le premier étage du passage étranglé est délimité entre la base annulaire du corps en élastomère et la première pièce de tôle.

Grâce à ces dispositions, on obtient un passage étranglé de grande longueur, s'étendant sur deux étages, en utilisant une cloison simplement constituée de deux pièces de tôle, donc particulièrement légère et peu coûteuse.

Dans des modes de réalisation préférés du support antivibratoire selon l'invention, on peut éventuellement avoir recours en outre à l'une et/ou à l'autre des dispositions suivantes :
- la deuxième armature comporte une partie intérieure annulaire qui appartient à la base du corps en élastomère et qui forme une gorge ouverte vers la première pièce de tôle, cette gorge délimitant le premier étage du passage étranglé avec ladite première pièce de tôle, les première et deuxième extrémités du premier étage du passage étranglé étant séparées l'une de l'autre par un bouchon d'élastomère appartenant au corps en élastomère ;
- la première pièce de tôle comporte un rebord annulaire extérieur qui s'étend selon l'axe central vers la deuxième armature, jusqu'à un bord annulaire libre appliqué axialement en contact étanche contre une partie extérieure de la deuxième armature, la partie intérieure de la deuxième armature comportant une jupe intérieure qui se prolonge parallèlement à l'axe central au-delà dudit bord annulaire libre, jusqu'au contact d'une partie annulaire radiale appartenant à la première pièce de tôle, le premier étage du passage étranglé étant délimité partiellement par ladite jupe intérieure et ledit rebord extérieur de la première pièce de tôle ;
- la première pièce de tôle comporte une partie annulaire pleine qui est en contact axial étanche avec la deuxième pièce de tôle et qui se prolonge vers l'intérieur par un ressaut annulaire lui-même prolongé par la première grille, le logement de clapet étant délimité latéralement par ledit ressaut annulaire de la première pièce de tôle ;
- le premier étage du passage étranglé communique avec le deuxième étage du passage étranglé par l'intermédiaire d'une ouverture découpée dans la première pièce de tôle, et le deuxième étage du passage étranglé communique avec la chambre de compensation par l'intermédiaire d'une ouverture découpée dans la deuxième pièce de tôle ;
- l'ouverture découpée dans la deuxième pièce de tôle est réalisée au moins dans le bord d'appui annulaire extérieur et dans le ressaut de ladite deuxième pièce de tôle, les première et deuxième extrémités du deuxième étage du passage étranglé étant séparées l'une de l'autre par un bouchon d'élastomère moulé d'une seule pièce avec la paroi souple en élastomère contre une face intérieure du bord d'appui intérieur et de la paroi latérale de l'embase, ledit bouchon d'élastomère de l'embase pénétrant partiellement dans l'ouverture de la deuxième pièce de tôle, et la deuxième grille présentant une partie annulaire pleine qui est appliquée axialement en contact étanche contre ledit bouchon d'élastomère de l'embase ;
- le bouchon d'élastomère de l'embase comporte une fente ouverte axialement vers le corps en élastomère et latéralement vers la première extrémité du deuxième étage du passage étranglé, le ressaut de la deuxième pièce de tôle comportant une tranche qui délimite latéralement l'ouverture découpée dans ladite deuxième pièce de tôle et qui pénètre dans ladite fente ;
- la paroi souple en élastomère est surmoulée sur l'embase en formant une surépaisseur au voisinage du bouchon d'élastomère de l'embase sur le bord appui intérieur de l'embase, l'ouverture découpée dans la deuxième pièce de tôle formant deux tranches dans le bord d'appui annulaire extérieur de ladite deuxième pièce de tôle, ces deux tranches étant disposées de part et d'autre du bouchon d'élastomère de l'embase et de ladite surépaisseur ;
- le bouchon d'élastomère de l'embase comporte un pion qui fait saillie axialement vers le corps en élastomère et la première pièce de tôle comporte une partie qui vient en appui axial étanche contre le bouchon d'élastomère de l'embase et qui comprend un trou dans lequel est engagé le pion.

D'autres caractéristiques et avantages de l'invention apparaîtront au cours de la description suivante d'une de ses formes de réalisation, donnée à titre d'exemple non limitatif, en regard des dessins joints.

Sur les dessins :
- la figure 1 est une vue en coupe verticale d'un support antivibratoire selon une forme de réalisation de l'invention,
- les figures 2 et 3 sont des vues en perspective des deux faces d'un clapet de découplage appartenant au support antivibratoire de la figure 1,
- la figure 4 est un graphe représentant la raideur dynamique du support antivibratoire de la figure 1 en fonction de la fréquence, comparée à la raideur dynamique du même support antivibratoire doté d'un clapet de découplage sans picots et dépourvu de déflecteur dans sa chambre de travail,
- les figures 5 et 6 sont des vues éclatées en perspective du support antivibratoire de la figure 1,
- les figures 7 et 8 sont des vues de détail en perspective de deux parties du support antivibratoire de la figure 1, comprenant l'une, un corps en élastomère résistant à la compression et l'autre, un soufflet en élastomère.

Sur les différentes figures, les mêmes références désignent des éléments identiques ou similaires.

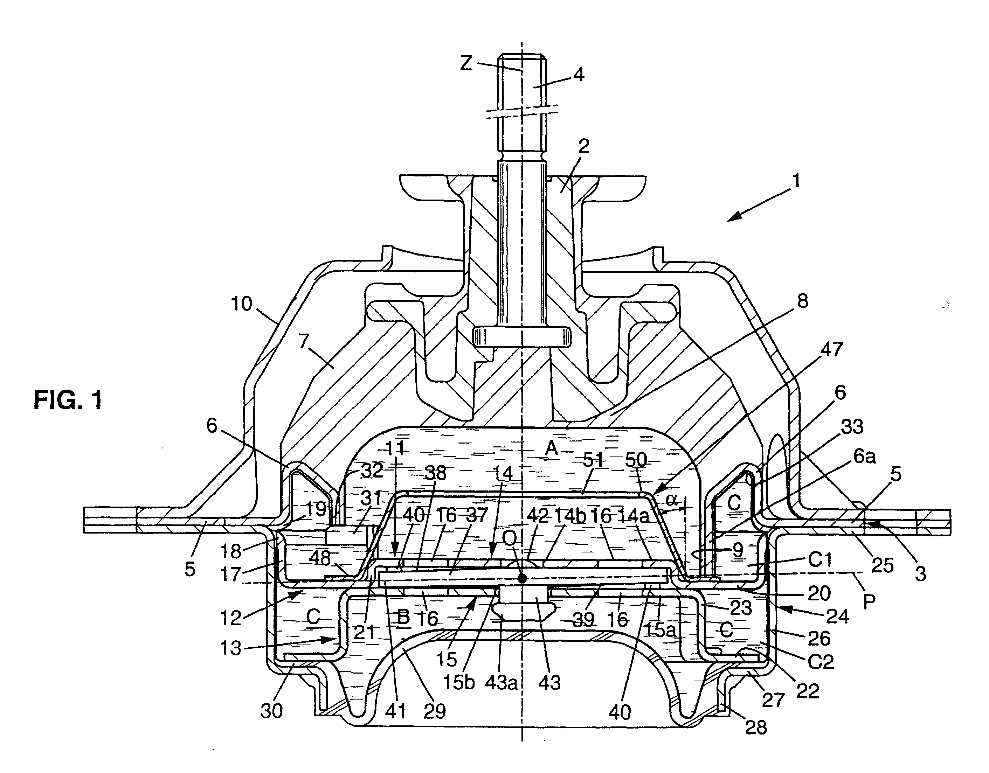

La figure 1 représente un support antivibratoire hydraulique 1 comportant des première et deuxième armatures 2,3 qui sont par exemple destinées à être fixées respectivement au bloc motopropulseur et à la caisse d'un véhicule.

Dans l'exemple considéré, la première armature 2 se présente sous la forme d'un plot métallique, réalisé par exemple en alliage léger, qui est centré sur un axe vertical Z et qui solidaire d'un goujon fileté 4 permettant par exemple la fixation du plot au bloc motopropulseur.

La deuxième armature 3, quant à elle, est formée par une couronne de tôle découpée et emboutie, également centrée sur l'axe Z. Dans l'exemple représenté, la deuxième armature 3 comporte une partie extérieure 5 qui s'étend dans un plan radial par rapport à l'axe Z et qui est destinée à être fixée par exemple à la caisse du véhicule, et une partie intérieure 6 creuse, à section sensiblement en forme de U inversé, formant une gorge annulaire 33 ouverte axialement à l'opposé de la première armature 2. La partie intérieure 6 forme en outre une jupe intérieure axiale 6a, qui s'étend vers le bas au-delà de la partie extérieure 5.

Les deux armatures 2, 3 sont reliées entre elles par un corps en élastomère 7 relativement épais, qui présente une résistance à la compression suffisante pour reprendre les efforts statiques dus au poids du bloc motopropulseur. Ce corps en élastomère 7 présente une paroi latérale en forme de cloche qui s'étend entre un sommet 8 surmoulé sur la première armature 2, et une base annulaire 9 qui est surmoulée sur la partie intérieure 6 de la deuxième armature.

Par ailleurs, la deuxième armature 3 est solidaire d'un capot limiteur 10 en tôle, qui présente une forme annulaire et recouvre avec jeu le corps en élastomère 7, en laissant le passage au goujon 4. Le capot 10 limite ainsi les débattements relatifs entre les première et deuxième armatures 2, 3.

La deuxième armature 3 est également solidaire d'une cloison rigide 11 qui délimite avec le corps en élastomère 5 une première chambre A remplie de liquide, dite chambre de travail.

Dans l'exemple considéré, la cloison rigide 11 est constituée de première et deuxième pièces de tôle embouties 12, 13 superposées, en forme de coupelles, qui forment respectivement dans leurs parties centrales des première et deuxième grilles plates 14, 15 qui présentent des trous 16 et qui s'étendent perpendiculairement à l'axe central Z.

La première pièce de tôle 12 comporte par exemple :
- un rebord annulaire 17 qui s'étend parallèlement à l'axe Z, ce rebord annulaire présentant un bord annulaire libre supérieur 18 en appui étanche contre une couche d'élastomère 19, laquelle couche 19 appartient au corps en élastomère 7 et est surmoulée sous la partie extérieure 5 de la deuxième armature,
- une partie annulaire 20 qui s'étend radialement vers l'intérieur à partir de l'extrémité inférieure du rebord 17, la jupe intérieure 6a de la deuxième armature étant en appui étanche contre cette partie annulaire 20,
- un ressaut 21 qui s'étend vers la chambre de travail A à partir du bord radialement intérieur de la partie annulaire 12,
- et ladite première grille 14, qui prolonge le ressaut 21 radialement vers l'intérieur.

Par ailleurs, la deuxième pièce de tôle 13 comporte, dans l'exemple considéré :
- un bord d'appui extérieur annulaire 22 qui s'étend radialement par rapport à l'axe central Z,
- un ressaut annulaire 23 qui s'étend axialement parallèlement à l'axe Z vers la première pièce de tôle 12,
- et ladite deuxième grille 15, qui présente une périphérie extérieure en appui sous la partie annulaire 20 de la première pièce de tôle 12.

Le support antivibratoire 1 comporte en outre une embase 24 réalisée en tôle découpée et emboutie, qui comprend :
- un bord d'appui annulaire 25 qui est fixé à la partie extérieure 5 de la deuxième armature, par exemple par sertissage, et qui est en appui étanche contre ladite couche d'élastomère 19 sous la partie extérieure 5 de la deuxième armature,
- une paroi latérale annulaire axiale 26 qui s'étend à partir de la périphérie intérieure du bord d'appui 25, parallèlement à l'axe Z et en éloignement de la deuxième armature 3,
- un bord d'appui inférieur 27, qui prolonge radialement vers l'intérieur l'extrémité inférieure de la paroi latérale 26,
- et une nervure axiale 28 qui s'étend axialement à l'opposé du corps en élastomère 7 à partir de la portion radialement intérieure du bord d'appui 27.

Le bord d'appui 27 et la nervure 28 de l'embase 24 sont surmoulés par un soufflet souple 29 en élastomère, qui forme également une couche 30 d'élastomère recouvrant le bord d'appui 27 de l'embase et contre laquelle le bord d'appui 22 de la deuxième pièce de tôle 13 vient en appui étanche.

Ainsi, le soufflet 29 définit avec la cloison 11 une deuxième chambre B, dite chambre de compensation, qui est remplie de liquide.

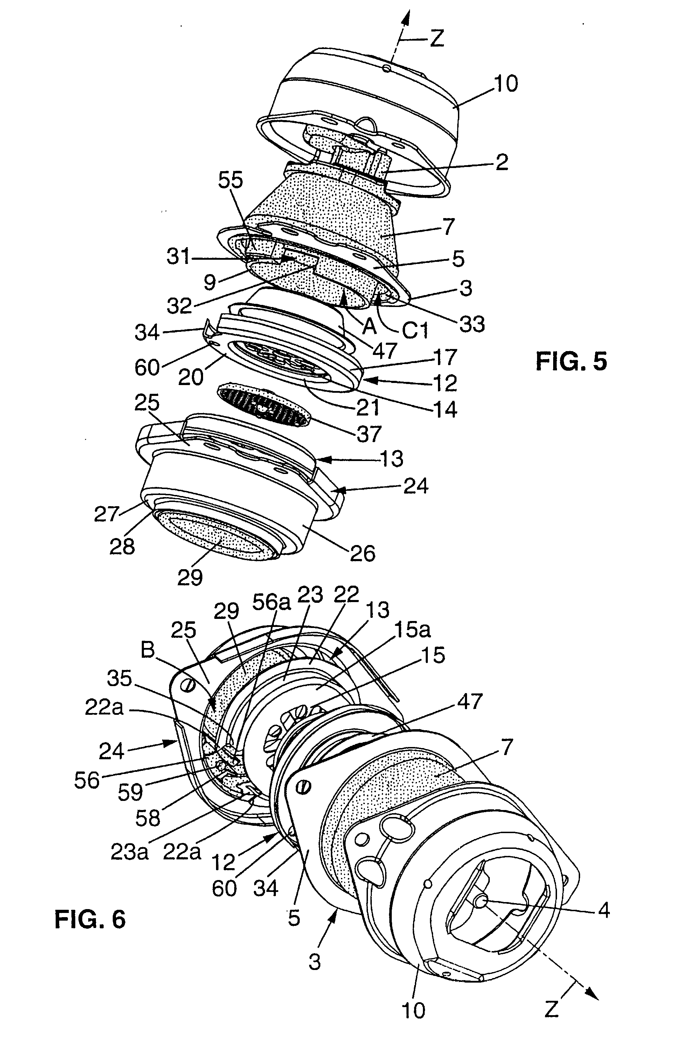

Cette chambre de compensation B communique avec la chambre de travail A par l'intermédiaire d'un passage étranglé C annulaire, qui s'étend sur sensiblement deux tours et sur deux étages autour des chambres A et B, savoir :
- un premier étage C1 qui communique avec la chambre de travail A par l'intermédiaire d'une ouverture 31 obtenue par une découpe 32 de la jupe intérieure 6a de la deuxième armature et par un évidemment correspondant de la base 9 du corps en élastomère, le premier étage C1 du passage étranglé étant délimité entre d'une part, la première pièce de tôle 12 et d'autre part, la gorge annulaire 33 ménagée dans la base 9 du corps en élastomère à l'intérieur de la partie intérieure creuse 6,
- et un deuxième étage C2 qui est délimité par les première et deuxième pièces de tôle 12, 13 et par la paroi latérale 26 de l'embase, ce deuxième étage C2 communiquant avec le premier étage C1 par l'intermédiaire d'une ouverture 34 ménagée dans la première pièce de tôle 12 (voir figure 5), et ledit deuxième étage C2 communiquant en outre avec la chambre de compensation B par l'intermédiaire d'une ouverture 35 ménagée dans la deuxième pièce de tôle 13 (voir figure 6).

Par ailleurs, le support antivibratoire 1 comporte également un clapet de découplage 37, visible sur les figures 1 à 3, qui est monté avec un faible jeu (par exemple, de l'ordre de 0,5 à 1 mm) entre les première et deuxième grilles 14, 15.

Ce clapet de découplage se présente sous la forme d'une plaquette d'élastomère qui est adaptée pour vibrer entre les première et deuxième grilles 14, 15 en s'appliquant alternativement contre ces deux grilles et en les obturant lorsque les première et deuxième armatures 2, 3 subissent des mouvements vibratoires relatifs.

Le clapet de découplage 37 comporte, sur ses première et deuxièmes faces 38, 39, des picots saillants 40 en élastomère qui sont disposés pour prendre appui sur les première et deuxième grilles 14, 15, de façon qu'en l'absence de vibrations relatives entre les première et deuxième armatures 2, 3, le clapet 37 présente un plan moyen P disposé en biais par rapport aux première et deuxième grilles 14, 15.

Lorsque le clapet de découplage est soumis à des vibrations, les picots 40 sont adaptés pour s'écraser sous l'effet de la pression du liquide dans les chambres A, B qui communiquent respectivement avec les première et deuxième faces 38, 39 du clapet de découplage par l'intermédiaire des première et deuxième grilles 14, 15. Ainsi, le rebord périphérique 41 du clapet peut alors venir s'appuyer avec étanchéité contre des parties annulaires pleines 14a, 15a entourant les trous 16 des grilles 14, 15.

De plus, le clapet 37 comporte avantageusement des premier et deuxième tétons de centrage 42, 43 qui coopèrent par engagement mutuel avec les grilles 14, 15 pour centrer le clapet de découplage 37. Dans l'exemple représenté, le premier téton de centrage 42 présente une forme hémisphérique et pénètre dans un trou 14b de la première grille 14, tandis que le deuxième téton de centrage 43 est clipsé dans un trou 15b de la deuxième grille 15, ce deuxième téton de centrage 43 présentant une tête élargie 43a qui pénètre dans la chambre de compensation B.

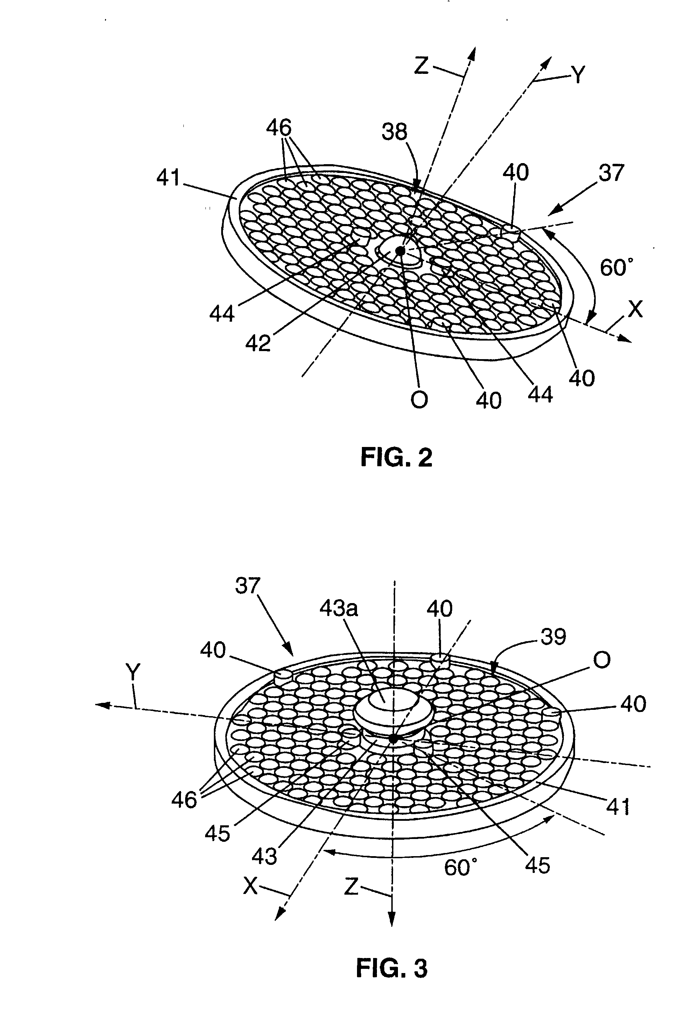

Comme représenté plus en détails sur les figures 2 et 3, les picots 40 qui induisent la position inclinée du clapet de découplage sont de préférence disposés près de la périphérie extérieure du clapet de découplage et seront dits ci-après picots extérieurs.

Les picots extérieurs 40 du clapet de découplage sont de préférence répartis en des premier et deuxième groupes de picots extérieurs 40 : les picots extérieurs 40 du premier groupe sont disposés uniquement sur la première face 38, d'un seul côté d'une ligne imaginaire traversant le clapet de découplage parallèlement au plan moyen P dudit clapet de découplage, tandis que les picots extérieurs 40 du deuxième groupe sont disposés uniquement sur la deuxième face 39 du clapet de découplage, de l'autre côté de ladite ligne imaginaire.

Dans l'exemple considéré, le clapet de découplage 37 présente la forme d'un disque et la ligne imaginaire en question est un axe diamétral Y sensiblement perpendiculaire à l'axe central Z et passant par le centre O du clapet.

Dans l'exemple représenté, le premier groupe de picots extérieurs comprend trois picots extérieurs 40, dont l'un est disposé en alignement avec un axe X passant par le centre O du clapet et perpendiculaire à l'axe Y (les axes X, Y définissent le plan moyen P susmentionné du clapet de découplage), tandis que les deux autres picots extérieurs 40 du premier groupe sont disposés sensiblement à 60° de l'axe X par rapport au centre O du clapet de découplage.

De plus, toujours dans l'exemple représenté, le deuxième groupe de picots extérieurs comprend également trois picots extérieurs 40 qui sont disposés de façon sensiblement symétriques des picots extérieurs 40 du premier groupe, par rapport à l'axe Y : ainsi, les picots extérieurs 40 du deuxième groupe comprennent également un picot extérieur aligné avec l'axe X et deux picots extérieurs disposés sensiblement à 60° de l'axe X par rapport au centre O du clapet de découplage. Les picots extérieurs 40 des premier et deuxième groupes sont disposés au voisinage du rebord extérieur 41 susmentionné du clapet de découplage, lequel rebord extérieur 41 fait saillie vers les grilles 14, 15 à partir des deux faces 38, 39 du clapet de découplage. Les picots extérieurs 40 s'étendent toutefois au delà du rebord extérieur 41 vers les grilles 14, 15.

Grâce à ces dispositions, et notamment grâce à la position inclinée du clapet imposée par les picots extérieurs 40, on réduit notablement les phénomènes de claquements de clapet contre les grilles et on réduit la raideur dynamique du support antivibratoire à fréquences élevées.

Avantageusement, pour contribuer encore à améliorer les performances acoustiques du support antivibratoire, on peut également avoir recours aux dispositions suivantes :
- on peut réaliser sur la première face 38 du clapet de découplage deux picots intérieurs 44 disposés au voisinage du téton de centrage 42 et présentant par exemple la même taille que les picots extérieurs 40, ces picots intérieurs 44 étant par exemple disposés en alignement avec le centre O du clapet selon l'axe X,
- on peut réaliser sur la deuxième face 39 du clapet de découplage, deux picots intérieurs 45 situés au voisinage du téton de centrage 43 et disposés par exemple à l'opposé des picots extérieurs 40 du deuxième groupe par rapport à l'axe Y, les picots intérieurs 45 étant par exemple disposés symétriquement par rapport à l'axe X en formant chacun avec cet axe un angle de l'ordre de 60° par rapport au centre O du clapet,
- et on peut réaliser sur les deux faces 38, 39 du clapet de découplage des bossages arrondis 46 qui font saillie respectivement vers les première et deuxième grilles 14, 15, de préférence en affleurant le rebord 41 et en tous cas sans dépasser les picots 40, 44, 45.

On notera que les faces 38, 39 du clapet 37 pourraient être inversées, sans sortir du cadre de l'invention.

Avantageusement, le support antivibratoire 1 comporte en outre un déflecteur 47 en forme de couronne annulaire centrée sur l'axe Z, qui s'étend à l'intérieur de la chambre de travail A en entourant la première grille 14 et en convergeant vers le sommet 8 du corps en élastomère. L'ouverture 31, par laquelle le passage étranglé C débouche dans la chambre de travail A, se trouve radialement à l'extérieur du déflecteur 47.

Dans l'exemple représenté, le déflecteur 47 comporte un bord d'appui 48 qui s'étend radialement par rapport à l'axe Z et qui est serré axialement entre la base 9 du corps en élastomère et la partie annulaire 20 de la première pièce de tôle 12. Ce bord d'appui 48 se prolonge radialement vers l'intérieur et axialement vers le sommet 8 du corps en élastomère par une paroi latérale 49 qui dans l'exemple représenté présente une forme tronconique, en formant un angle α compris par exemple entre 15 et 35° avec l'axe Z. Cette paroi latérale 49 est elle-même prolongée, à son extrémité supérieure, par un rebord aplati 50 qui s'étend sensiblement radialement vers l'intérieur et qui délimite une ouverture circulaire 51. La largeur du rebord 50 est comprise par exemple entre 2 et 5% du diamètre de l'ouverture 51.

Grâce aux dispositions qui viennent d'être décrites, on améliore très nettement les caractéristiques acoustiques du support antivibratoire 1, et notamment sa raideur dynamique K aux fréquences élevées.

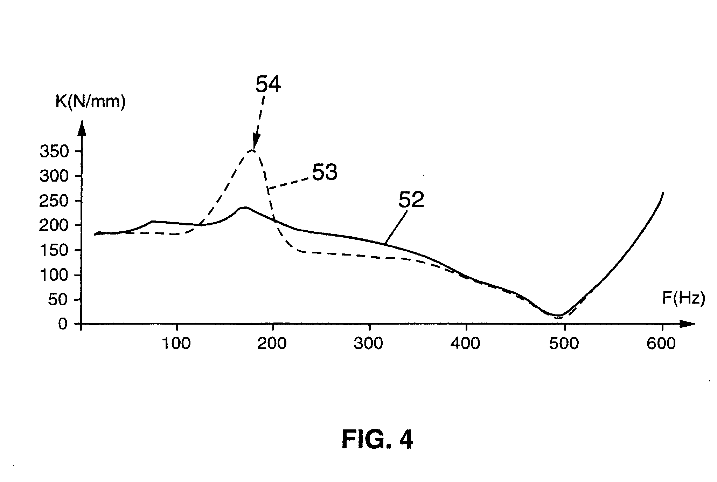

En particulier, on a représenté sur la figure 4, en traits pleins, la courbe 52 de la raideur dynamique K du support antivibratoire selon l'axe Z en fonction de la fréquence F, et on a représenté en pointillés la courbe 53 de la raideur dynamique du même support antivibratoire 1 mais pourvu d'un clapet de découplage classique et dépourvu du déflecteur 47.

On peut voir sur la figure 4 que le support antivibratoire permet d'éviter un pic de raideur 54 caractéristique des supports antivibratoires de l'art antérieur, pic de raideur qui correspondait à la transmission de vibrations acoustiques entre le moteur et la caisse du véhicule.

On notera que le clapet de découplage 37 et le déflecteur 47 produisent chacun un effet bénéfique sur les caractéristiques acoustiques du support antivibratoire, et que, le cas échéant, chacun de ces éléments pourrait être utilisé indépendamment l'un de l'autre.

Autrement dit, le déflecteur 47 peut être utilisé efficacement avec un clapet de découplage autre que le clapet 37 décrit ci-dessus, et le clapet 37 décrit ci-dessus pourrait être utilisé avec bénéfice en l'absence du déflecteur 47.

Toutefois, les inventeurs de la présente invention ont pu constater que la combinaison du clapet de découplage 37 avec le déflecteur 47 produit des effets bénéfiques encore bien supérieurs aux effets qui auraient pu être attendus compte tenu des effets produits par le clapet 37 isolément et des effets produits par le déflecteur 47 isolément.

Par ailleurs, on notera que la réalisation décrite ci-dessus du passage étranglé C est particulièrement économique, dans la mesure où cette réalisation permet d'obtenir un long passage étranglé C, s'étendant sur deux tours, sans avoir recours à une pièce moulée en alliage léger, comme c'est le cas habituellement.

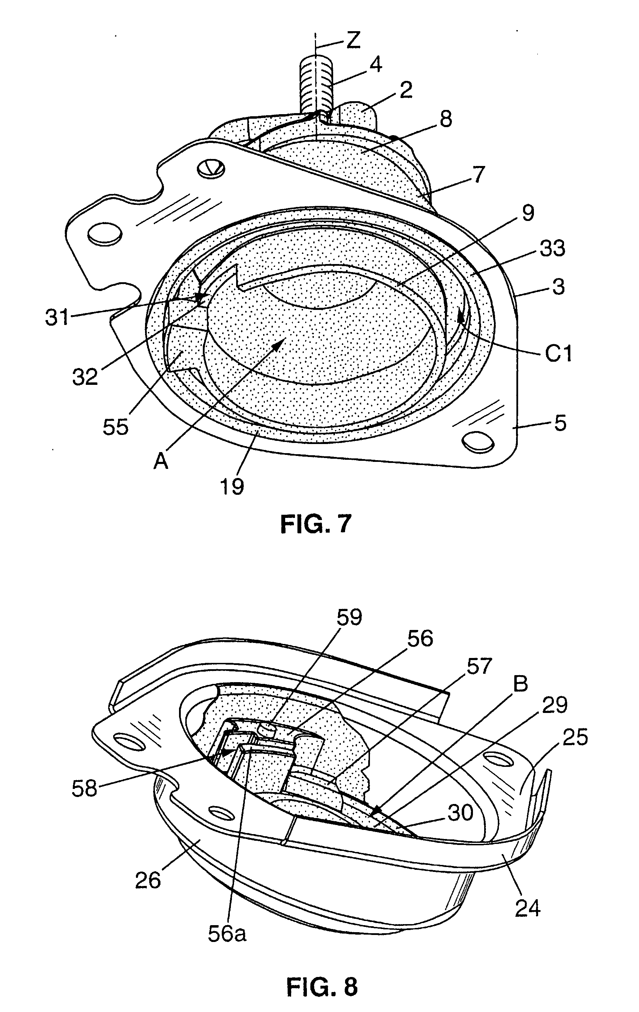

La façon dont est réalisé ce passage étranglé dans l'exemple considéré est représentée plus en détails sur les figures 5 à 8 :
- comme représenté sur les figures 5 et 7, le corps en élastomère 7 forme un bouchon d'élastomère 55 qui obture le premier étage C1 du passage étranglé entre d'une part, l'ouverture 31 qui fait communiquer le passage étranglé avec la chambre de travail A et d'autre part, l'ouverture 34 qui est découpée dans le rebord annulaire 17 et dans la partie annulaire 20 de la pièce de tôle 12 pour faire communiquer entre eux les premier et deuxième étages C1, C2 du passage étranglé,
- et le soufflet en élastomère 29 est moulé d'une seule pièce avec un bouchon d'élastomère 56, bien visible sur les figures 6 et 8, lequel bouchon d'élastomère obture le deuxième étage C2, du passage étranglé entre l'ouverture 34 susmentionnée et l'ouverture 35 qui fait communiquer le deuxième étage C2 du passage étranglé avec la chambre de compensation B, l'ouverture 35 étant découpée dans le bord d'appui 22, dans le ressaut 23 et dans la périphérie extérieure de la partie annulaire pleine 15a de la deuxième pièce de tôle 13.

Ainsi, le liquide qui passe de la chambre de travail A à la chambre de compensation B suit toute la longueur du passage étranglé C, en suivant d'abord le premier étage C1 dans un sens angulaire, puis le deuxième étage C2, de préférence dans le même sens angulaire.

On notera que l'assemblage des première et deuxième pièces de tôle 12, 13 dans le support antivibratoire est facilité, dans l'exemple considéré, grâce aux dispositions suivantes :
- les tranches 22a du bord d'appui 22, qui délimitent partiellement la découpe 35 de la deuxième pièce de tôle 13, viennent s'engager de part et d'autre du bouchon d'élastomère 56 et d'une surépaisseur d'élastomère 57 moulée d'une seule pièce avec ledit bouchon en élastomère 56 (voir figures 6 et 8),
- le bouchon 56 comporte une surface d'appui 56a orientée selon un plan radial et sur lequel vient s'appuyer avec étanchéité une portion de la partie annulaire pleine 15a de la grille 15 au voisinage de l'une 23a des tranches du ressaut 23 de la deuxième pièce de tôle 13, de façon que le bouchon d'élastomère 56 obture une portion de l'ouverture 35 en séparant ainsi ladite ouverture 35 de l'ouverture 34 qui communique avec le premier étage C1 du passage étranglé,
- la tranche 23a du ressaut 23, qui délimite partiellement l'ouverture 35 à l'opposé de la portion non obturée de ladite ouverture, est décalée vers l'intérieur de ladite ouverture 35 par rapport à la tranche correspondante 22a du bord d'appui 22, et cette tranche 23a vient s'engager dans une fente 58 en arc de cercle, centrée autour de l'axe Z, ladite fente 58 étant ménagée dans le bouchon d'élastomère 56, à l'opposé de la partie de l'ouverture 35 laissée libre par le bouchon 56,
- le bouchon d'élastomère 56 comporte avantageusement un pion de centrage 59 orienté axialement vers la première pièce de tôle 12 et s'engageant dans un trou correspondant 60 de ladite première pièce de tôle, de façon à positionner angulairement ladite première pièce de tôle,
- le bord d'appui 25 de l'embase et la partie extérieure 5 de la deuxième armature présentent une forme non symétrique de révolution, de façon à déterminer la position angulaire relative de ces deux pièces l'une par rapport à l'autre lors du montage.

## Revendications

1. Support antivibratoire hydraulique destiné à relier entre eux des premier et deuxième éléments rigides pour amortir et filtrer des vibrations entre ces éléments, ce support comportant :
- des première et deuxième armatures rigides (2, 3) destinées à être fixées respectivement aux premier et deuxième éléments rigides à réunir,
- un corps en élastomère (7) qui présente sensiblement une forme de cloche s'étendant selon un axe central (Z) entre un sommet (8) solidaire de la première armature (2) et une base annulaire (9) solidaire de la deuxième armature (3),
- une chambre de travail (A) remplie de liquide, au moins partiellement délimitée par le corps en élastomère (7),
- une chambre de compensation (B) remplie de liquide, délimitée partiellement par une paroi souple en élastomère (29),
- une cloison rigide (11) qui sépare la chambre de travail (A) et la chambre de compensation (B), cette cloison rigide comportant une première pièce de tôle (12) qui est en contact étanche avec la base annulaire (9) du corps en élastomère et une deuxième pièce rigide (13) qui est en contact étanche avec ladite première pièce de tôle (12) et qui délimite la chambre de compensation (B) avec la paroi souple (29), la première pièce de tôle (12) comportant une première grille centrale (14) qui communique avec la chambre de travail (A) et la deuxième pièce rigide (13) comportant une deuxième grille centrale (15) qui communique avec la chambre de compensation (B) en délimitant avec la première grille (14) un logement de clapet,
- un clapet de découplage (37) disposé dans le logement de clapet de façon à être déplaçable avec un faible débattement parallèlement à l'axe central (Z) en obturant les première et deuxième grilles (14, 15),
- et un passage étranglé (C) rempli de liquide, qui fait communiquer la chambre de travail (A) avec la chambre de compensation (B), ce passage étranglé étant délimité partiellement par la première pièce de tôle (12) et la deuxième pièce rigide (13) de la cloison rigide, ledit passage étranglé s'étendant angulairement autour du clapet de découplage (37) sur une longueur linéaire supérieure au périmètre de la cloison rigide, et ce passage étranglé comportant des premier et deuxième étages (C1, C2), le premier étage (C1) du passage étranglé étant voisin de la chambre de travail (A) et s'étendant entre une première extrémité qui communique avec la chambre de travail et une deuxième extrémité (32) qui communique avec le deuxième étage (C2), tandis que le deuxième étage (C2) du passage étranglé est voisin de la chambre de compensation (B) et s'étend entre une première extrémité qui communique avec la deuxième extrémité du premier étage et une deuxième extrémité qui communique avec la chambre de compensation (B),
**caractérisé en ce que** la deuxième pièce rigide (13) de la coque rigide est constituée par une deuxième pièce de tôle, découpée et emboutie,
**en ce que** la paroi souple en élastomère (29) est solidaire d'une embase rigide (24) qui est elle-même solidarisée avec la deuxième armature (3) et qui présente au moins une paroi latérale (26) s'étendant selon l'axe central (Z) depuis la deuxième armature (3) jusqu'à un bord d'appui annulaire intérieur (27),
**en ce que** la deuxième pièce de tôle (13) comporte un bord d'appui annulaire extérieur (22) qui est en contact étanche avec le bord d'appui annulaire intérieur (27) de l'embase, la deuxième pièce de tôle comportant en outre un ressaut (23) qui s'étend selon l'axe central (Z) depuis ledit bord d'appui annulaire extérieur (22) jusqu'à une zone annulaire pleine (15a) qui est en contact étanche avec la première pièce de tôle, le deuxième étage (C2) du passage étranglé étant délimité entre la première pièce de tôle (12), la paroi latérale (26) de l'embase, le bord d'appui annulaire intérieur (27) de l'embase, le bord d'appui annulaire extérieur (22) de la deuxième pièce de tôle et le ressaut (23) de ladite deuxième pièce de tôle,
**et en ce que** le premier étage (C1) du passage étranglé est délimité entre la base annulaire (9) du corps en élastomère et la première pièce de tôle (12).

2. Support antivibratoire selon la revendication 1, dans lequel la deuxième armature (3) comporte une partie intérieure annulaire (6) qui appartient à la base (9) du corps en élastomère et qui forme une gorge (33) ouverte vers la première pièce de tôle (12), cette gorge délimitant le premier étage (C1) du passage étranglé avec ladite première pièce de tôle, les première et deuxième extrémités du premier étage du passage étranglé étant séparées l'une de l'autre par un bouchon d'élastomère (55) appartenant au corps en élastomère.

3. Support antivibratoire selon la revendication 1 ou la revendication 2, dans lequel la première pièce de tôle (12) comporte un rebord annulaire extérieur (17) qui s'étend selon l'axe central (Z) vers la deuxième armature (3), jusqu'à un bord annulaire libre (18) appliqué axialement en contact étanche contre une partie extérieure (5) de la deuxième armature, la partie intérieure (6) de la deuxième armature comportant une jupe intérieure (6a) qui se prolonge parallèlement à l'axe central (Z) au-delà dudit bord annulaire libre (18), jusqu'au contact d'une partie annulaire radiale (20) appartenant à la première pièce de tôle, le premier étage (C1) du passage étranglé étant délimité partiellement par ladite jupe intérieure (6a) et ledit rebord annulaire extérieur (17) de la première pièce de tôle.

4. Support antivibratoire selon l'une quelconque des revendications précédentes, dans lequel la première pièce de tôle (12) comporte une partie annulaire pleine (20) qui est en contact axial étanche avec la deuxième pièce de tôle (13) et qui se prolonge vers l'intérieur par un ressaut annulaire (21) lui-même prolongé par la première grille (14), le logement de clapet étant délimité latéralement par ledit ressaut annulaire (21) de la première pièce de tôle.

5. Support antivibratoire selon l'une quelconque des revendications précédentes, dans lequel le premier étage (C1) du passage étranglé communique avec le deuxième étage (C2) du passage étranglé par l'intermédiaire d'une ouverture (32) découpée dans la première pièce de tôle, et le deuxième étage (C2) du passage étranglé communique avec la chambre de compensation (B) par l'intermédiaire d'une ouverture (33) découpée dans la deuxième pièce de tôle.

6. Support antivibratoire selon la revendication 5, dans lequel l'ouverture (33) découpée dans la deuxième pièce de tôle est réalisée au moins dans le bord d'appui annulaire extérieur (22) et dans le ressaut (23) de ladite deuxième pièce de tôle, les première et deuxième extrémités du deuxième étage (C2) du passage étranglé étant séparées l'une de l'autre par un bouchon d'élastomère (56) moulé d'une seule pièce avec la paroi souple en élastomère (29) contre une face intérieure du bord d'appui intérieur (27) et de la paroi latérale (26) de l'embase, ledit bouchon d'élastomère de l'embase (56) pénétrant partiellement dans l'ouverture (33) de la deuxième pièce de tôle, et la deuxième grille (15) présentant une partie annulaire pleine (15a) qui est appliquée axialement en contact étanche contre ledit bouchon d'élastomère de l'embase (56).

7. Support antivibratoire selon la revendication 6, dans lequel le bouchon d'élastomère de l'embase (56) comporte une fente (58) ouverte axialement vers le corps en élastomère (7) et latéralement vers la première extrémité du deuxième étage du passage étranglé, le ressaut (23) de la deuxième pièce de tôle comportant une tranche (23a) qui délimite latéralement l'ouverture (33) découpée dans ladite deuxième pièce de tôle et qui pénètre dans ladite fente (58) .

8. Support antivibratoire selon l'une quelconque des revendications précédentes, dans lequel la paroi souple en élastomère (29) est surmoulée sur l'embase (24) en formant une surépaisseur (57) au voisinage du bouchon d'élastomère de l'embase (56) sur le bord d'appui intérieur (27) de l'embase, l'ouverture (33) découpée dans la deuxième pièce de tôle formant deux tranches (22a) dans le bord d'appui annulaire extérieur (22) de ladite deuxième pièce de tôle, ces deux tranches (22a) étant disposées de part et d'autre du bouchon d'élastomère de l'embase (56) et de ladite surépaisseur (57).

9. Support antivibratoire selon l'une quelconque des revendications 5 à 8, dans lequel le bouchon d'élastomère de l'embase (56) comporte un pion (59) qui fait saillie axialement vers le corps en élastomère (7) et la première pièce de tôle (12) comporte une partie (20) qui vient en appui axial étanche contre le bouchon d'élastomère de l'embase (56) et qui comprend un trou dans lequel est engagé le pion (59).

## Patentansprüche

1. Hydraulisches schwingungsdämpfendes Lager, das dazu bestimmt ist, ein erstes und ein zweites starres Element miteinander zu verbinden, um Schwingungen zwischen diesen Elementen zu dämpfen und zu filtern, bestehend aus:
- einer ersten und einer zweiten starren Halterung (2, 3), die dazu bestimmt sind, an dem ersten bzw. dem zweiten starren Element, die miteinander zu verbinden sind, befestigt zu werden,
- einem Elastomerkörper (7), der im Wesentlichen die Form einer Glocke aufweist, die sich mit einer Mittelachse (Z) zwischen einer Spitze (8), die mit der ersten Halterung (2) fest verbunden ist, und einer ringförmigen Basis (9), die mit der zweiten Halterung (3) fest verbunden ist, erstreckt,
- einer mit Flüssigkeit gefüllten Arbeitskammer (A), die zumindest teilweise durch den Elastomerkörper (7) umgrenzt ist,
- einer mit Flüssigkeit gefüllten Ausgleichskammer (B), die teilweise durch eine biegsame Elastomerwand (29) umgrenzt ist,
- einer starren Trennwand (11), die die Arbeitskammer (A) und die Ausgleichskammer (B) voneinander trennt, wobei diese starre Trennwand ein erstes Blechteil (12) enthält, das sich in dichtem Kontakt mit der ringförmigen Basis (9) des Elastomerkörpers befindet, und ein zweites starres Teil (13) enthält, das sich in dichtem Kontakt mit dem ersten Blechteil (12) befindet und das die Ausgleichskammer (B) mit der biegsamen Wand (29) umgrenzt, wobei das erste Blechteil (12) ein erstes zentrales Gitter (14) aufweist, das mit der Arbeitskammer (A) kommuniziert, und wobei das zweite starre Teil (13) ein zweites zentrales Gitter (15) aufweist, das mit der Ausgleichskammer (B) kommuniziert, wobei es mit dem ersten Gitter (14) zusammen eine Klappenaufnahme bildet,
- einer Entkopplungsklappe (37), die so in der Klappenaufnahme angeordnet ist, dass sie mit einem leichten Ausschlag parallel zur Mittelachse (Z) verschiebbar ist, wobei sie das erste und das zweite Gitter (14, 15) verschließt, und
- einem mit Flüssigkeit gefüllten engen Durchgang (C), der die Arbeitskammer (A) mit der Ausgleichskammer (B) verbindet, wobei dieser enge Durchgang teilweise durch das erste Blechteil (12) und das zweite starre Teil (13) der starren Trennwand umgrenzt ist, wobei sich dieser enge Durchgang winkelig um die Entkopplungsklappe (37) herum erstreckt, und zwar über eine lineare Länge, die größer ist als der Perimeter der starren Trennwand, und wobei dieser enge Durchgang eine erste und eine zweite Stufe (C1, C2) aufweist, wobei sich die erste Stufe (C1) des engen Durchgangs nahe bei der Arbeitskammer (A) befindet und sich zwischen einem ersten Ende, das mit der Arbeitskammer kommuniziert, und einem zweiten Ende (32), das mit der zweiten Stufe (C2) kommuniziert, erstreckt, während sich die zweite Stufe (C2) des engen Durchgangs nahe bei der Ausgleichskammer (B) befindet und sich zwischen einem ersten Ende, das mit dem zweiten Ende der ersten Stufe kommuniziert, und einem zweiten Ende, das mit der Ausgleichskammer (B) kommuniziert, erstreckt,
**dadurch gekennzeichnet,**
**dass** das zweite starre Teil (13) der starren Trennwand von einem zweiten, ausgeschnittenen und tiefgezogenen Blechteil gebildet wird,
**dass** die biegsame Elastomerwand (29) mit einem starren Sockel (24) fest verbunden ist, der seinerseits mit der zweiten Halterung (3) fest verbunden ist und mindestens eine Seitenwand (26) aufweist, die sich um die Mittelachse (Z) von der zweiten Halterung (3) aus bis zu einem inneren, ringförmigen Anlagerand (27) erstreckt,
**dass** das zweite starre Blechteil (13) einen äußeren ringförmigen Anlagerand (22) aufweist, der sich in dichtem Kontakt mit dem inneren, ringförmigen Anlagerand (27) des Sockels (24) befindet, wobei das zweite Blechteil ferner einen Rücksprung (23) aufweist, der sich um die Mittelachse (Z) von diesem äußeren ringförmigen Anlagerand (22) bis zu einem vollen, ringförmigen Bereich (15a) erstreckt, der sich in dichtem Kontakt mit dem ersten Blechteil befindet, wobei die zweite Stufe (C2) des engen Durchgangs zwischen dem ersten Blechteil (12), der Seitenwand (26) des Sockels, dem inneren, ringförmigen Anlagerand (27) des Sockels, dem äußeren ringförmigen Anlagerand (22) des zweiten Blechteils und dem Rücksprung (23) dieses zweiten Blechteils eingegrenzt ist,
und **dass** die erste Stufe (C1) des engen Durchgangs zwischen der ringförmigen Basis (9) des Elastomerkörpers und dem ersten Blechteil (12) eingegrenzt ist.

2. Schwingungsdämpfendes Lager nach Anspruch 1, bei dem die zweite Halterung (3) einen ringförmigen, inneren Teil (6) aufweist, der zu der Basis (9) des Elastomerkörpers gehört und eine zu dem ersten Blechteil (12) hin offene Verengung (33) bildet, wobei diese Verengung die erste Stufe (C1) des engen Durchgangs mit diesem ersten Blechteil (12) eingrenzt, wobei das erste und das zweite Ende der ersten Stufe des engen Durchgangs durch einen Elastomerstopfen (55) voneinander getrennt sind, welcher zu dem Elastomerkörper gehört.

3. Schwingungsdämpfendes Lager nach Anspruch 1 oder 2, bei dem das erste Blechteil (12) einen ringförmigen Außenrand (17) aufweist, der sich um die Mittelachse (Z) in Richtung der zweiten Halterung (3) bis zu einem freien ringförmigen Rand (18) erstreckt, welcher axial in dichtem Kontakt an einen äußeren Teil (5) der zweiten Halterung angedrückt ist, wobei der innere Teil (6) der zweiten Halterung eine Innenverkleidung (6a) enthält, die sich parallel zur Mittelachse (Z) über den freien ringförmigen Rand (18) hinaus bis zum Kontakt mit einem radialen ringförmigen Teil (20) fortsetzt, welcher zu dem ersten Blechteil gehört, wobei die erste Stufe (C1) des engen Durchgangs teilweise von dieser Innenverkleidung (6a) und diesem ringförmigen Außenrand (17) des ersten Blechteils eingegrenzt wird.

4. Schwingungsdämpfendes Lager nach einem der vorherigen Ansprüche, bei dem das erste Blechteil (12) einen vollen ringförmigen Teil (20) aufweist, der sich in dichtem Kontakt mit dem zweiten Blechteil (13) befindet und sich nach innen in einem ringförmigen Rücksprung (21) fortsetzt, der seinerseits durch das erste Gitter (14) verlängert wird, wobei die Klappenaufnahme seitlich durch diesen ringförmigen Rücksprung (21) des ersten Blechteils eingegrenzt wird.

5. Schwingungsdämpfendes Lager nach einem der vorherigen Ansprüche, bei dem die erste Stufe (C1) des engen Durchgangs mit der zweiten Stufe (C2) des engen Durchgangs über eine Öffnung (32) kommuniziert, die in dem ersten Blechteil ausgeschnitten ist, und die zweite Stufe (C2) des engen Durchgangs mit der Ausgleichskammer (B) über eine Öffnung (33) kommuniziert, die in dem zweiten Blechteil ausgeschnitten ist.

6. Schwingungsdämpfendes Lager nach Anspruch 5, bei dem die in dem zweiten Blechteil ausgeschnittene Öffnung (33) mindestens in dem äußeren ringförmigen Anlagerand (22) und in dem Rücksprung (23) dieses zweiten Blechteils ausgeführt ist, wobei das erst und das zweite Ende der zweiten Stufe (C2) des engen Durchgangs durch einen Elastomerstopfen (56) voneinander getrennt sind, der einstückig mit der biegsamen Elastomerwand (29) an einer Innenseite des inneren Anlagerandes (27) und der Seitenwand (26) des Sockels geformt ist, wobei dieser Elastomerstopfen (56) des Sockels teilweise in die Öffnung (33) des zweiten Blechteils eindringt, und wobei das zweite Gitter (15) einen vollen, ringförmigen Bereich (15a) aufweist, der axial in dichtem Kontakt an diesem Elastomerstopfen (56) des Sockels anliegt.

7. Schwingungsdämpfendes Lager nach Anspruch 6, bei dem der Elastomerstopfen (56) des Sockels einen Schlitz (58) aufweist, der axial zu dem Elastomerkörper (7) hin und seitlich zu dem ersten Ende der zweiten Stufe (C2) des engen Durchgangs hin offen ist, wobei der Rücksprung (23) des zweiten Blechteils eine Scheibe (23a) aufweist, die die in dem zweiten Blechteil ausgeschnittene Öffnung (33) seitlich begrenzt und in diesen Schlitz (58) eindringt.

8. Schwingungsdämpfendes Lager nach einem der vorherigen Ansprüche, bei dem die biegsame Elastomerwand (29) auf den Sockel (24) aufgeformt ist, indem dabei in der Nähe des Elastomerstopfens (56) des Sockels an dem inneren Anlagerand (27) des Sockels eine Überdicke gebildet wird, wobei die in dem zweiten Blechteil ausgeschnittene Öffnung (33) zwei Scheiben (22a) in dem äußeren ringförmigen Anlagerand (22) dieses zweiten Blechteils bildet, wobei diese Scheiben (22a) beiderseits des Elastomerstopfens (56) des Sockels und der genannten Überdicke (57) angeordnet sind.

9. Schwingungsdämpfendes Lager nach einem der Ansprüche 5 bis 8, bei dem der Elastomerstopfen (56) des Sockels einen Zapfen (59) aufweist, der in Achsrichtung zu dem Elastomerkörper (7) hin hervorsteht, und das erste Blechteil (12) einen Teil (20) aufweist, der in dichte axiale Anlage an dem Elastomerstopfen (56) des Sockels kommt und ein Loch aufweist, in das der Zapfen (59) eingreift.

## Claims

1. A hydraulic vibration-damping support serving to interconnect first and second rigid elements so as to damp and filter vibration between said elements, the support comprising:
first and second rigid strength members (2, 3) serving to be fixed to respective ones of the first and second rigid elements to be interconnected;
an elastomer body (7) that is substantially bell-shaped, extending about a central axis (Z) between a top (8) secured to the first strength member (2) and an annular base (9) secured to the second strength member (3);
a working chamber (A) filled with liquid and defined at least in part by the elastomer body (7);
a compensation chamber (B) filled with liquid and defined at least in part by a flexible elastomer wall (29);
a rigid partition (11) that separates the working chamber (A) from the compensation chamber (B), which rigid partition comprises a sheet metal first piece (12) that is in leaktight contact with the annular base (9) of the elastomer body, and a rigid second piece (13) that is in leaktight contact with said sheet metal first piece (12) and that co-operates with the flexible wall (29) to define the compensation chamber (B), the sheet metal first piece (12) being provided with a first central grating (14) that communicates with the working chamber (A), and the rigid second piece (13) being provided with a second central grating (15) that communicates with the compensation chamber (B) while co-operating with the first grating (14) to define a valve member recess;
a decoupling valve member (37) disposed in the valve member recess to move over a short stroke parallel to the central axis (Z) to close off the first and second gratings (14, 15); and
a constricted passage (C) filled with liquid and that puts the working chamber (A) into communication with the compensation chamber (B), the constricted passage being defined in part by the sheet metal first piece (12) and by the rigid second piece (13) of the rigid partition, said constricted passage extending angularly around the decoupling valve member (37) over a linear length that is greater than the perimeter of the rigid partition, and said constricted passage being made up of first and second stages (C1, C2), the first stage (C1) of the constricted passage being adjacent to the working chamber (A) and extending between a first end that communicates with the working chamber and a second end (32) that communicates with the second stage (C2), while the second stage (C2) of the constricted passage is adjacent to the compensation chamber (B) and extends between a first end which communicates with the second end of the first stage and a second end which communicates with the compensation chamber (B);
the vibration-damping support being **characterized:**
**in that** the rigid second piece (13) of the rigid shell is constituted by a second piece of sheet metal that is cut out and stamped;
**in that** the flexible elastomer wall (29) is secured to a rigid base (24) which is itself secured to the second strength member (3) and which has at least one side wall (26) extending about the central axis (Z) from the second strength member (3) to an inner annular abutment margin (27);
**in that** the second piece of sheet metal (13) includes an outer annular abutment margin (22) that is in leaktight contact with the inner annular abutment margin (27) of the base, the second piece of sheet metal further including a step (23) which extends about the central axis (Z) from said outer annular abutment margin (22) to a non-perforated annular zone (15a) that is in leaktight contact with the first piece of sheet metal, the second stage (C2) of the constricted passage being defined between the first piece of sheet metal (12), the side wall (26) of the base, the inner annular abutment margin (27) of the base, the outer annular abutment margin (22) of the second piece of sheet metal, and the step (23) of said second piece of sheet metal;
and **in that** the first stage (C1) of the constricted passage is defined between the annular base (9) of the elastomer body, and the first piece of sheet metal (12).

2. A vibration-damping support according to claim 1, in which the second strength member (3) includes an annular inner portion (6) which is part of the base (9) of the elastomer body and which forms a groove (33) that is open facing towards the first piece of sheet metal (12), said groove co-operating with said first piece of sheet metal to define the first stage (C1) of the constricted passage, the first and second ends of the first stage of the constricted passage being separated from each other by an elastomer stopper (55) that is part of the elastomer body.

3. A vibration-damping support according to claim 1 or claim 2, in which the first piece of sheet metal (12) is provided with an outer annular rim (17) that extends about the central axis (Z) towards the second strength member (3) to a free annular edge (18) that is applied axially in leaktight contact against an outer portion (5) of the second strength member, the inner portion (6) of the second strength member being provided with an inner skirt (6a) that is extended parallel to the central axis (Z) beyond said free annular edge (18) to come into contact with a radial annular portion (20) that is part of the first piece of sheet metal, the first stage (C1) of the constricted passage being defined in part by said inner skirt (6a) and by said outer annular rim (17) of the first piece of sheet metal.

4. A vibration-damping support according to any preceding claim, in which the first piece of sheet metal (12) includes a non-perforated annular portion (20) which is in leaktight axial contact with the second piece of sheet metal (13) and which is extended inwards by an annular step (21) that is itself extended by the first grating (14), the valve member recess being defined laterally by said annular step (21) of the first piece of sheet metal.

5. A vibration-damping support according to any preceding claim, in which the first stage (C1) of the constricted passage communicates with the second stage (C2) of the constricted passage via an opening (32) cut out in the first piece of sheet metal, and the second stage (C2) of the constricted passage communicates with the compensation chamber (B) via an opening (33) cut out in the second piece of sheet metal.

6. A vibration-damping support according to claim 5, in which the opening (33) cut out in the second piece of sheet metal is provided at least in the outer annular abutment margin (22) and in the step (23) of said second piece of sheet metal, the first and second ends of the second stage (C2) of the constricted passage being separated from each other by an elastomer stopper (56) molded integrally with the flexible elastomer wall (29) against an inner face of the inner abutment margin (27) and an inner face of the side wall (26) of the base, said elastomer stopper (56) of the base penetrating in part into the opening (33) in the second piece of sheet metal, and the second grating (15) having a non-perforated portion (15a) that is applied axially in leaktight contact against said elastomer stopper (56) of the base.

7. A vibration-damping support according to claim 6, in which the elastomer stopper (56) of the base is provided with a slot (58) that is open axially towards the elastomer body (7) and laterally towards the first end of the second stage of the constricted passage, the step (23) of the second piece of sheet metal having an edge (23a) that laterally defines the opening (33) cut out in said second piece of sheet metal and that penetrates into said slot (58).

8. A vibration-damping support according to any preceding claim, in which the flexible elastomer wall (29) is molded over the base (24) so that it forms extra thickness (57) in the vicinity of the elastomer stopper (56) of the base, the opening (33) cut out in the second piece of sheet metal forming two edges (22a) in the outer annular abutment margin (22) of said second piece of sheet metal, the two edges (22a) being disposed on either side of the elastomer stopper (56) of the base and on either side of said extra thickness (57).

9. A vibration-damping support according to any one of claims 5 to 8, in which the elastomer stopper (56) of the base is provided with a stud (59) that projects axially towards the elastomer body (7), and the first piece of sheet metal (12) includes a portion (20) that comes into leaktight axial abutment against the elastomer stopper (56) of the base, and that is provided with a hole in which the stud (59) is engaged.
